# EUROPEAN PATENT APPLICATION

(11) **EP 4 844 011 A1**
(43) Date of publication of application: **25.11.2026**
(21) Application number: 25861319.9
(22) Date of filing: 27.08.2025
(51) Int. Cl.: C08F 220/56, C08F 220/54, C08F 226/06, H01M 50/42, H01M 50/431, H01M 50/449, H01M 10/0525

(54) **POLYMER COMPOSITION, POLYMER SLURRY, SEPARATOR FOR BATTERY, AND BATTERY**

(30) Priority: 27.08.2024 KR 20240114940
(71) Applicant: LG Chem, Ltd., Seoul 07336 (KR)
(72) Inventor: PARK, Beomsu, Seoul 07796 (KR); KIM, Sejong, Seoul 07796 (KR); KIM, Hyun Cheol, Seoul 07796 (KR); SHIN, Young Jun, Seoul 07796 (KR); JUNG, Jihye, Seoul 07796 (KR); KIM, Jinwoo, Seoul 07796 (KR); YANG, Hyung Il, Seoul 07796 (KR)
(74) Representative: Hoffmann Eitle
(86) International application number: PCT/KR2025/013102
(87) International publication number: WO 2026/049507

(57) **Abstract**

The present invention relates to a polymer composition, a polymer slurry, a separator for battery, and a battery, and may comprise a polymer component comprising: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

## Description

### [Technical Field]

The present document claims the benefit of priority of Application No. 10-2024-0114940 filed with the Korean Intellectual Property Office on August 27, 2024, the entire content of which is incorporated herein by reference.

The present invention relates to a polymer composition.

The present invention relates to a polymer slurry.

The present invention relates to a separator for battery.

The present invention relates to a battery.

### [BACKGROUND ART]

A polymer composition or polymer slurry, which is a mixture of such polymer compositions, may be used in various ways in secondary battery such as electrodes, separators, and the like. The conventional polymer composition or slurry used in separator was organic-solvent-based.

Recently, there is a technical trend of converting the polymer composition or slurry used in separator for battery to aqueous-solvent-based. However, aqueous solvent is a major factor causing side reaction of electrolyte solution in secondary battery.

A separator may be easily exposed to heat during the assembly process or operation process of the battery. A separator exposed to heat is prone to shrink. A shrunk separator may adversely affect the stability of the battery.

Therefore, the development of an aqueous-solvent-based polymer composition or slurry capable of reducing the moisture content and thermal shrinkage rate of the separator for battery is required.

### [TECHNICAL PROBLEM]

The present invention intends to provide a polymer composition capable of reducing the moisture content and thermal shrinkage rate of the separator for battery.

The present invention intends to provide a polymer slurry capable of reducing the moisture content and thermal shrinkage rate of the separator for battery.

The present invention intends to provide a separator for battery with reduced moisture content and thermal shrinkage rate.

The present invention intends to provide a battery capable of suppressing electrolyte solution side reaction and having improved stability.

### [SOLUTION TO PROBLEM]

One embodiment of the present invention is a polymer composition comprising a polymer component comprising: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

The content of the first polymerization unit of the polymer component may be 80 wt% or more.

The content of the second polymerization unit of the polymer component may be in the range of 5 parts by weight to 20 parts by weight relative to 100 parts by weight of the first polymerization unit.

The content of the third polymerization unit of the polymer component may be in the range of 5 parts by weight to 20 parts by weight relative to 100 parts by weight of the first polymerization unit.

The first polymerization unit may comprise a polymerization unit derived from (meth)acrylamide.

The second polymerization unit may comprise a polymerization unit derived from dimethyl (meth)acrylamide.

The third polymerization unit may comprise a polymerization unit derived from a monomer containing an N-substituted lactam group having 6 or more nuclear atoms.

The third polymerization unit may be derived from a monomer whose homopolymer has a lower critical solution temperature (LCST) in the range of 25 °C to 50 °C.

The third polymerization unit may comprise a polymerization unit derived from N-vinyl caprolactam.

The weight average molecular weight of the polymer component may be in the range of 500,000 to 2,000,000.

The polydispersity index of the polymer component may be in the range of 2.5 to 5.

The solid content of the polymer composition may be in the range of 1 wt% to 10 wt%.

The polymer composition may further comprise an aqueous solvent.

Another embodiment of the present invention is a polymer slurry comprising a first polymer composition; inorganic particles; and a second polymer composition, wherein the first polymer composition comprises a first polymer component comprising: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

The second polymer composition may comprise a (meth)acrylate-based copolymer.

The content of the first polymer composition of the polymer slurry may be in the range of 1 part by weight to 5 parts by weight relative to 100 parts by weight of the inorganic particles.

The content of the second polymer composition of the polymer slurry may be in the range of 1 part by weight to 5 parts by weight relative to 100 parts by weight of the inorganic particles.

The solid content of the polymer slurry may be in the range of 30 wt% to 70 wt%.

The polymer slurry may further comprise an aqueous solvent.

Another embodiment of the present invention is a separator for battery comprising a porous substrate layer; and a polymer layer disposed on one surface or both surfaces of the porous substrate layer, wherein the polymer layer comprises a first polymer composition; inorganic particles; and a second polymer composition, and the first polymer composition comprises a first polymer component comprising: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

The thickness per layer of the polymer layer may be in the range of 1 µm to 1.5 µm.

Another embodiment of the present invention is a battery comprising a positive electrode; a negative electrode; a separator disposed between the positive electrode and the negative electrode; and an electrolyte solution, wherein the separator comprises a porous substrate layer; and a polymer layer disposed on one surface or both surfaces of the porous substrate layer, the polymer layer comprises a first polymer composition; inorganic particles; and a second polymer composition, and the first polymer composition comprises a first polymer component comprising: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

The electrolyte solution may comprise a carbonate-based solvent.

The polymer layer may adhere the positive electrode and the substrate layer, the negative electrode and the substrate layer, or both the positive electrode and the substrate layer and the negative electrode and the substrate layer.

### [ADVANTAGEOUS EFFECTS OF INVENTION]

The polymer composition of the present invention may reduce the moisture content and thermal shrinkage rate of the separator for battery.

The polymer slurry of the present invention may reduce the moisture content and thermal shrinkage rate of the separator for battery.

The separator for battery of the present invention may reduce the moisture content and thermal shrinkage rate.

The battery of the present invention may suppress electrolyte solution side reaction and have improved stability.

### [DETAILED DESCRIPTION OF THE INVENTION]

The present document may use ordinal numbers such as "first" and "second" when referring to a plurality of components. Here, there is no priority among each component.

In the present document, when a specific commercially available product is used as a component, the properties of that component may refer to the properties described in the technical data sheet (TDS) or certification of analysis (COA) of that product.

In the present document, when the physical properties of a specific material vary depending on temperature and pressure, etc., the measurement standard for such physical properties may be 25 °C and 101.325 kPa.

In the present document, the numerical range of "A to B" means "A or more and B or less".

The numerical values mentioned in the present document are rounded values. For example, 1.5 is a number within the range of 1.45 to 1.54.

Hereinafter, the present document describes the present invention in more detail.

One embodiment of the present invention is a polymer composition.

The polymer composition may comprise a polymer component of a specific composition.

The polymer component may comprise at least three different polymerization units. The three polymerization units may have in common at least that they contain an amide group.

The polymer component may comprise: a first polymerization unit derived from a monomer containing an N-unsubstituted (meth)acrylamide group; a second polymerization unit derived from a monomer containing an N-disubstituted (meth)acrylamide group; and a third polymerization unit derived from a monomer containing a lactam group having 6 or more nuclear atoms.

The polymer component may further comprise a fourth polymerization unit derived from a monomer containing an N-monosubstituted (meth)acrylamide group.

In the present document, a polymerization unit may refer to the backbone constituting the polymer.

In the present document, a monomer containing an N-unsubstituted (meth)acrylamide group may refer to a monomer in which neither of the two hydrogen atoms on the nitrogen of the (meth)acrylamide group is substituted with a functional group other than hydrogen.

In the present document, a monomer containing an N-monosubstituted (meth)acrylamide group may refer to a monomer in which one of the two hydrogen atoms on the nitrogen of the (meth)acrylamide group is substituted with a functional group other than hydrogen.

In the present document, a monomer containing an N-disubstituted (meth)acrylamide group may refer to a monomer in which both of the two hydrogen atoms on the nitrogen of the (meth)acrylamide group are substituted with functional groups other than hydrogen.

In the present document, a monomer containing a lactam group having 6 or more nuclear atoms may refer to a monomer containing a cyclic amide group, the number of atoms of the ring of which is 6 or more.

The lower critcal solution temperature (LCST) of the homopolymer of each of the first polymerization unit to the third polymerization unit may be different. By appropriately combining polymerization units derived from nitrogen-containing monomers having such different homopolymer LCSTs, the moisture content and thermal shrinkage rate of a separator for battery made from the polymer composition can be reduced.

Although not limited to theory, moisture in a separator for battery may react with electrolyte salt (such as LiPF₆) to form unstable by-products such as HF. This can accelerate the deterioration of the electrode interface (SEI and CEI) and corrode the electrode active material, thereby lowering the lifespan and stability. If the moisture content of the separator for battery is excessive, the ionic conductivity of the electrolyte may deteriorate. In a separator for battery, a certain amount of moisture can improve the wettability of the separator and easily impregnate the electrolyte. However, this is limited to improving initial performance, and in the long term, it can lead to degradation of battery lifespan and safety.

Furthermore, the thermal shrinkage rate of the separator for battery may be determined by the balance between the thermal shrinkage tendency of the porous substrate layer described later and the binding force of the polymer layer, where the thermal shrinkage rate of the separator for battery may vary depending on the homopolymer LCST of the monomers constituting the polymer component included in the polymer layer.

A monomer having a low homopolymer LCST may undergo phase separation at a relatively low temperature and induce thermal shrinkage of the separator, while a monomer having a high homopolymer LCST may increase the binding force between the polymer layer and the porous substrate layer at a relatively high temperature and suppress the thermal shrinkage rate. The polymer composition of the present invention may simultaneously reduce the moisture content and thermal shrinkage rate of the separator for battery by adjusting the balance therebetween.

In the present document, the LCST of a polymer may refer to the temperature at which the polymer and solvent separate into different phases. The LCST may be determined by differential scanning calorimetry (DSC) or turbidity measurement. Therefore, a polymer may exist in a homogeneous phase in a solvent at temperatures below the LCST, and may undergo phase separation with the solvent at temperatures above the LCST. The solvent may include an aqueous solvent.

In particular, the third polymerization unit may further reduce the moisture content of the separator for battery manufactured with the polymer component, owing to its cyclic structure and the number of nuclear atoms. Specifically, the monomer component derived from the third polymerization unit may exhibit relatively non-polar properties compared to lactam-containing monomers having a smaller number of nuclear atoms. Such relative non-polarity may further reduce the moisture content of the separator manufactured with the polymer composition comprising the third polymerization unit.

In the polymer composition, the polymer component phase-separates at a specific temperature exceeding room temperature, thereby not only reducing the moisture content of the separator produced therefrom, but also smoothly coating the polymer composition is important. Therefore, it is preferable that the polymer component comprises, in appropriate amounts, a polymerization unit having a relatively low homopolymer LCST and a polymerization unit having a relatively high homopolymer LCST.

In the polymer composition, the polymer component may comprise the first polymerization unit at a specific ratio. Specifically, the content of the first polymerization unit of the polymer component may be 80 wt% or more. In the polymer component, the contents of the first to third polymerization units may be appropriately adjusted to simultaneously reduce the moisture content and thermal shrinkage rate of the separator for battery.

The content of the second polymerization unit of the polymer component may be in the range of 5 parts by weight to 20 parts by weight relative to 100 parts by weight of the first polymerization unit. The lower limit of the content of the second polymerization unit of the polymer component (unit: parts by weight) may be 6, 7, 8, 9, 10, 11, 12, or 12.5 relative to 100 parts by weight of the first polymerization unit. Also, the upper limit of the content of the second polymerization unit of the polymer component (unit: parts by weight) may be 19, 18, 17, 16, 15, 14, 13, or 12.5 relative to 100 parts by weight of the first polymerization unit.

The content of the third polymerization unit of the polymer component may be in the range of 5 parts by weight to 20 parts by weight relative to 100 parts by weight of the first polymerization unit. The lower limit of the content of the third polymerization unit of the polymer component (unit: parts by weight) may be 6, 7, 8, 9, 10, 11, 12, or 12.5 relative to 100 parts by weight of the first polymerization unit. Also, the upper limit of the content of the third polymerization unit of the polymer component (unit: parts by weight) may be 19, 18, 17, 16, 15, 14, 13, or 12.5 relative to 100 parts by weight of the first polymerization unit.

The monomer containing an N-unsubstituted (meth)acrylamide group may comprise one or more selected from the group consisting of (meth)acrylamide and maleic amide. Preferably, the monomer containing an N-unsubstituted (meth)acrylamide group may comprise (meth)acrylamide. More preferably, the monomer containing an N-unsubstituted (meth)acrylamide group may comprise acrylamide.

The monomer containing an N-monosubstituted (meth)acrylamide group may comprise one or more selected from the group consisting of N-isopropyl(meth)acrylamide, N-methylol(meth)acrylamide, diacetone (meth)acrylamide, (meth)acrylamide t-butylsulfonic acid, hydroxyethyl(meth)acrylamide, N-n-butoxymethyl(meth)acrylamide, N-isobutoxymethyl(meth)acrylamide, N-methoxymethyl(meth)acrylamide, N-t-butyl(meth)acrylamide, N,N-methylenebis(meth)acrylamide, and N-t-butyl(meth)acrylamide sulfonic acid. Preferably, the monomer containing an N-monosubstituted (meth)acrylamide group may comprise diacetone (meth)acrylamide. More preferably, the monomer containing an N-monosubstituted (meth)acrylamide group may comprise diacetone acrylamide.

The monomer containing an N-disubstituted (meth)acrylamide group may comprise one or more selected from the group consisting of N,N-dimethyl(meth)acrylamide, N,N-diethyl(meth)acrylamide, N,N-dimethylaminopropyl(meth)acrylamide, and (meth)acryloyl morpholine. Preferably, the monomer containing an N-disubstituted (meth)acrylamide group may comprise N,N-dimethyl(meth)acrylamide. More preferably, the monomer containing an N-disubstituted (meth)acrylamide group may comprise N,N-dimethylacrylamide.

The monomer containing a lactam group having 6 or more nuclear atoms may be one in which one of the hydrogen atoms on the nitrogen of the central ring of the lactam is substituted or unsubstituted with a functional group other than hydrogen. Preferably, the monomer containing a lactam group having 6 or more nuclear atoms may comprise a monomer containing an N-substituted lactam group having 6 or more nuclear atoms. The monomer containing an N-substituted lactam group having 6 or more nuclear atoms may refer to a monomer in which one of the hydrogen atoms on the nitrogen of the central ring of the lactam is substituted with a functional group other than hydrogen. More preferably, the monomer containing a lactam group having 6 or more nuclear atoms may be N-vinyl caprolactam.

The monomer containing a lactam group having 6 or more nuclear atoms may exhibit specific thermal behavior. Specifically, the monomer containing a lactam group having 6 or more nuclear atoms may satisfy certain homopolymer properties.

The homopolymer LCST of the monomer containing a lactam group having 6 or more nuclear atoms may be more specifically defined. The monomer containing a lactam group having 6 or more nuclear atoms may have a homopolymer LCST in the range of 25 °C to 50 °C. The water solubility of a homopolymer composed of the third polymerization unit may change abruptly at the LCST. The temperature range may be lower than the temperature of the battery during the battery manufacturing process or the operation process of the battery.

Thus, the polymer composition comprising the third polymerization unit having a homopolymer LCST lower than the temperature of the battery during the battery manufacturing process or the operation process of the battery can further reduce the moisture content and thermal shrinkage rate of the separator manufactured therewith compared to the conventional ones.

The properties of the polymer component may also be appropriately adjusted.

The weight average molecular weight of the polymer component may be in the range of 500,000 to 2,000,000. Specifically, the lower limit of the weight average molecular weight of the polymer component may be 550,000, 600,000, 650,000, or 700,000. Specifically, the upper limit of the weight average molecular weight of the polymer component may be 1,900,000, 1,800,000, 1,700,000, 1,600,000, 1,500,000, 1,400,000, 1,300,000, 1,200,000, 1,100,000, 1,000,000, 900,000, 800,000, or 750,000. When the weight average molecular weight of the polymer component is within the range, the shear stress between the molecules constituting the polymer component may be adjusted. Accordingly, the polymer composition may exhibit a low thermal shrinkage rate.

The polydispersity index of the polymer component may be in the range of 2.5 to 5. Specifically, the lower limit of the polydispersity index of the polymer component may be 2.6, 2.7, 2.8, 2.9, 3.0, 3.1, 3.2, 3.3, 3.4, 3.5, or 3.55. Specifically, the upper limit of the polydispersity index of the polymer component may be 4.9, 4.8, 4.7, 4.6, 4.5, 4.4, 4.3, 4.2, 4.1, 4.0, 3.9, 3.8, 3.7, or 3.6. When the polydispersity index of the polymer component is within the range, the packing of the polymer component may proceed efficiently. Accordingly, the polymer composition may exhibit a low thermal shrinkage rate.

The polymer composition may further comprise a solvent. The polymer composition may further comprise an aqueous solvent. That is, the polymer composition may be aqueous-solvent-based. Even though the polymer composition is aqueous-solvent-based, it can be manufactured into a separator with low moisture content.

The polymer component may be water-soluble. Therefore, the polymer component may be dissolved in the aqueous solvent in the polymer composition.

The ratio occupied by the polymer component in the polymer composition, that is, the solid content of the polymer composition may also be adjusted. That is, the content of components other than the solvent in the polymer composition may be adjusted. The solid content of the polymer composition may be in the range of 1 wt% to 10 wt%. The lower limit of the solid content (unit: wt%) may be 1.5, 2.0, 2.5, 3.0, 3.5, 4.0, 4.5, 5.0, 5.5, 6.0, 6.5, 7.0, 7.5, or 8.0. The upper limit of the solid content (unit: wt%) may be 9.5, 9.0, 8.5, or 8.0. When the solid content of the polymer composition is within the range, when the solid content of the polymer composition is within the range, a separator comprising the composition can be manufactured smoothly without gelation.

Another embodiment of the present invention is a polymer slurry.

The polymer slurry may comprise a plurality of different polymer compositions.

In the present document, the plurality of polymer compositions being different may mean that the types, contents, properties, and/or functions of the polymer components constituting each are different.

The polymer slurry may comprise at least a first polymer composition and a second polymer composition. Here, the first polymer composition may be the polymer composition of the present invention as described above.

Therefore, in the description of the polymer slurry, the description of the first polymer composition may be the same as the description of the polymer composition of the present invention as described above.

The polymer slurry may further comprise inorganic particles. The polymer slurry may comprise inorganic particles to impart functions such as heat resistance to the separator for battery.

The inorganic particles may have one or more properties selected from among lithium ion conductivity, piezoelectricity, and flame retardancy.

The lithium ion conductive inorganic particles may contain lithium but not store lithium and may perform the function of transporting lithium ions. The interior of the lithium ion conductive inorganic particles may have a kind of defect. Charge carriers such as lithium ions may move using the defect. Therefore, the lithium ion conductive inorganic particles can improve lithium ion conductivity in the battery. As a result, the performance of the battery can also be improved.

The lithium ion conductive inorganic particles may comprise one or more selected from the group consisting of LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), and Li₇La₃Zr₂O₁₂.

Piezoelectric inorganic particles are materials that exhibit different electrical conductivity depending on applied pressure. Specifically, piezoelectric inorganic particles are insulators at normal pressure and become electrical conductors when a certain pressure is applied. The dielectric constant of the piezoelectric inorganic particles is relatively high. The dielectric constant of the piezoelectric inorganic particles may be 100 or more. When the piezoelectric inorganic particles are stretched or compressed with a certain pressure, charges may be generated. One side of the piezoelectric inorganic particles may be positively charged and the other side may be negatively charged, thereby creating a potential difference in the piezoelectric inorganic particles. When an external impact causes a short circuit inside the positive and negative electrodes, the piezoelectric inorganic particles disposed in the separator can prevent physical contact between the positive electrode and the negative electrode. The potential difference can apply a weak current between the positive and negative electrodes. This weak current can gradually lower the voltage of the battery when a short circuit occurs in the battery, thereby improving the safety of the battery.

The piezoelectric inorganic particles may comprise one or more selected from the group consisting of BaTiO₃, BaSO₄, Pb(Zr,Ti)O₃ (PZT), Pb₁₋ₓLaₓZr_{1-y}Ti_{y}O₃ (PLZT) (0<x<1, 0<y<1), Pb(Mg_{1/3}Nb_{2/3})O₃-PbTiO₃ (PMN-PT), and HfO₂ (hafnia).

The flame-retardant inorganic particles can add flame-retardant properties to the separator and prevent rapid temperature increase inside the battery.

The flame-retardant inorganic particles may comprise one or more selected from the group consisting of SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, Al₂O₃, AlOOH, Al(OH)₃, and TiO₂.

In the polymer slurry, the first polymer composition and the second polymer composition may exhibit at least different functions. The first polymer composition may act to adhere the separator manufactured from the polymer slurry to the electrode. The second polymer composition may act to bind the inorganic particles included in the polymer slurry.

In the polymer slurry, the first polymer composition and the second polymer composition may have different compositions. Since the first polymer composition may be the same as the polymer composition of the present invention, the first polymer composition may be a (meth)acrylamide-based polymer composition. The second polymer composition may have a different composition from the first polymer composition. For example, the second polymer composition may comprise a (meth)acrylate-based copolymer. Through this, the second polymer composition can exhibit the above-mentioned binding function.

In the polymer slurry, the contents of the first polymer composition and the second polymer composition may also be appropriately adjusted.

The content of the first polymer composition may be in the range of 1 part by weight to 5 parts by weight relative to 100 parts by weight of the inorganic particles. The lower limit of the content of the first polymer composition (unit: parts by weight) may be 1.5, 2.0, 2.5, or 3.0 relative to 100 parts by weight of the inorganic particles. The upper limit of the content of the first polymer composition (unit: parts by weight) may be 4.5, 4.0, 3.5, or 3.0 relative to 100 parts by weight of the inorganic particles.

The content of the second polymer composition may be in the range of 1 part by weight to 5 parts by weight relative to 100 parts by weight of the inorganic particles. The lower limit of the content of the second polymer composition (unit: parts by weight) may be 1.1, 1.2, 1.3, 1.4, or 1.5 relative to 100 parts by weight of the inorganic particles. The upper limit of the content of the first polymer composition (unit: parts by weight) may be 4.5, 4.0, 3.5, 3.0, 2.5, 2.0, or 1.5 relative to 100 parts by weight of the inorganic particles.

The polymer slurry may further comprise other components in addition to the above components. Specifically, the polymer slurry may further comprise a dispersant so that the polymer compositions are dispersed in the polymer slurry. Also, the polymer slurry may further comprise a surfactant so that the polymer compositions have particulate form in the polymer slurry. As the dispersant and the surfactant, known components or products may be used. The types of the dispersant and the surfactant may not be particularly limited.

Like the polymer composition of the present invention, the polymer slurry may also be aqueous-solvent-based. Therefore, the polymer slurry may further comprise an aqueous solvent. Even though the polymer slurry is aqueous-solvent-based, it can simultaneously reduce the moisture content and thermal shrinkage rate of the separator for battery.

Another embodiment of the present invention is a separator. Specifically, the separator may be a separator for battery.

In the present document, a battery may refer to a device that can convert electrical energy into chemical energy or chemical energy into electrical energy through an oxidation-reduction reaction.

The separator for battery may comprise a porous substrate layer; and a polymer layer.

The porous substrate layer may support the separator and provide structural stability to the separator. The porous substrate layer may comprise a polyolefin-based film.

Here, a polyolefin-based film means a film comprising a polyolefin-based polymer as a main component.

The polyolefin-based film may comprise the polyolefin-based polymer in an amount of 50 vol% or more, 90 vol% or more, or 95 vol% or more of the total material constituting the polyolefin-based film.

The weight average molecular weight of the component included in the polyolefin-based polymer may be 3×10⁵ to 25×10⁶. If the weight average molecular weight of the component included in the polyolefin-based polymer is 1,000,000 or more, the strength of the separator comprising the polyolefin porous film can be improved.

The polyolefin-based polymer may comprise a thermoplastic polymer. A thermoplastic polymer may comprise a homopolymer (for example, polyethylene, polypropylene, polybutene) in which monomers such as ethylene, propylene, 1-butene, 4-methyl-1-pentene, 1-hexene, etc., are polymerized, or a copolymer (for example, ethylenepropylene copolymer).

The polyolefin-based film may be a layer comprising the polyolefin-based polymers alone, or a layer comprising two or more polyolefin-based polymers. Among these, polyethylene with a high molecular weight having ethylene as a main backbone can prevent excessive current from flowing at a lower temperature (shutdown). Also, the polyolefin-based film may further comprise components other than the polyolefin-based polymer that do not impair the function of the film.

The polymer layer may be disposed on one surface or both surfaces of the porous substrate layer. Preferably, the polymer layer may be disposed on both surfaces of the porous substrate layer.

In the separator, the polymer layer may be manufactured from the polymer slurry as described above. Specifically, the polymer layer may be formed by coating the polymer slurry as described above on one surface or both surfaces of the porous substrate layer and drying it. Therefore, the polymer layer may contain most of the components included in the polymer slurry as described above.

The polymer layer may comprise a first polymer composition; inorganic particles; and a second polymer composition.

The first polymer composition included in the polymer layer may be the polymer composition of the present disclosure.

The inorganic particles and the second polymer composition included in the polymer layer may be the same as described in the polymer slurry of the present disclosure.

As such, the separator to which the polymer slurry of the present invention is applied can reduce the moisture content and thermal shrinkage rate. When the separator is applied to a battery, side reactions of the electrolyte solution can be reduced and performance can be improved.

The polymer layer can perform sufficient performance even though the polymer slurry is applied in a small amount. Also, applying the polymer slurry in a relatively small amount may be advantageous for reducing the moisture content of the separator. As a result, the polymer layer formed on the separator may be relatively thin. For example, the thickness of the polymer layer may be in the range of 1 µm to 1.5 µm. The thickness of the polymer layer may refer to the thickness per layer.

Another embodiment of the present invention is a battery. The battery may comprise the separator for battery of the present invention.

The battery may comprise at least a positive electrode, a negative electrode, and a separator disposed between the positive electrode and the negative electrode. Also, the battery may further comprise an electrolyte solution.

The separator may be the separator for battery of the present invention. Therefore, the description of the separator in the description of the battery may apply the above description as is. The battery can minimize side reactions caused by the electrolyte solution and may have improved thermal durability. This is because the electrolyte solution usually undergoes side reactions with water, but the separator has reduced moisture content, and a separator usually shrinks due to heat, but the separator has reduced shrinkage rate.

The battery may be a lithium ion battery. The electrolyte solution of a lithium ion battery may usually comprise a carbonate-based solvent. Water undergoes side reactions with the carbonate-based solvent and degrades battery performance, but the battery of the present invention has low moisture content, so the performance degradation thereof can be minimized.

Also, the polymer layer included in the separator may be a layer having both heat resistance and adhesiveness at the same time. Therefore, the polymer layer can impart heat resistance to the separator or the battery. Also, the polymer layer can adhere the porous substrate layer of the separator and the electrode (positive electrode and/or negative electrode). A separator that exhibits heat resistance and adhesiveness in separate layers may also be included within the scope of the present invention. Such a separator may further comprise an inorganic layer disposed between the polymer layer and the porous substrate and comprising inorganic particles. In this case, the inorganic particles may be included only in the inorganic layer.

In the battery, the positive electrode and the substrate layer, the negative electrode and the substrate layer, or both the positive electrode and the substrate layer and the negative electrode and the substrate layer may be adhered via the polymer layer. Preferably, both the positive electrode and the substrate layer and the negative electrode and the substrate layer may be adhered via the polymer layer.

Hereinafter, the present document describes the present invention in more detail through Examples and Comparative Examples. However, the present document does not limit the present invention to the Examples.

### [Preparation of Experimental Samples]

### Preparation Example 1. Polymer composition

(1) 80 parts by weight of acrylamide, 10 parts by weight of dimethyl acrylamide, and 10 parts by weight of N-vinyl caprolactam are charged into a reaction vessel.
(2) Then, 400 ppm of 3-mercaptopropionic acid is charged into the reaction vessel as a molecular weight regulator.
(3) Then, distilled water is charged into the reaction vessel as a reaction solvent so that the solid content of the reaction solution becomes 8 wt%.
(4) Thereafter, the inside of the reaction vessel is purged with nitrogen and the temperature is raised to 70 °C.
(5) Then, 5000 ppm of potassium percarbonate (KPS) is charged into the reaction vessel as a polymerization initiator, and polymerization is performed for 8 hours.

### Preparation Example 2. Polymer composition.

In step (1), 70 parts by weight of acrylamide, 5 parts by weight of diacetone acrylamide, and 25 parts by weight of N-vinyl pyrrolidone are charged into the reaction vessel, step (2) is not performed, and in step (3), distilled water is charged as a reaction solvent so that the solid content becomes 15 wt%, except for these differences, the same process as Preparation Example 1 was repeated. The N-vinyl pyrrolidone is known to have a higher polarity than N-vinyl caprolactam.

### Example. Polymer slurry

**In** distilled water, 100 parts by weight of inorganic particles (boehmite), 3 parts by weight of the first polymer composition, 1 part by weight of a dispersant (BYK-154), 1.5 parts by weight of the second polymer composition (binder, CSB-400), and 0.5 parts by weight of a surfactant (WE-3475) are blended to obtain a polymer slurry. As the first polymer composition, the polymer composition of Preparation Example 1 is used.

### Comparative Example. Polymer slurry

The same process as the Example was repeated except that the polymer composition of Preparation Example 2 is used as the first polymer composition.

### [Evaluation Methods]

### 1. GPC

The weight average molecular weight and polydispersity index of the polymer component of the polymer compositions of Preparation Example 1 and Preparation Example 2 were measured by gel permeation chromatography performed under the following conditions.
(1) Column (maker, model no.): 2 x TSKgel SupermultiporeHZ-M + TSKgel SuperHZ-2500
(2) Eleunt: THF
(3) Temperature: 40 °C
(4) Flow rate: 1.0 mL/min
(5) Injection volume, sample concentration: 30 µL, 1~10 mg/mL
(6) Standard: Polystyrene
(7) Detector: RI
(8) Device: PL GPC220 (Agilent Technologies) or GPC-900 (JASCO)

### 2. Moisture content

The moisture content of the separator made from the polymer slurry obtained in the Example and Comparative Example was measured according to the following procedure.
(1) The polymer slurry obtained in the Example and Comparative Example is coated on a polyethylene substrate layer with a Meyer bar.
(2) The coated slurry is dried in a Mathis oven to manufacture a separator.
(3) Approximately 0.2 g of the separator is cut to obtain a measurement specimen.
(4) The measurement specimen is placed in a vial and the moisture content is measured according to the Karl Fischer method. Metrohm's 899 Coulometer is used as the measurement equipment, and the moisture content can be calculated by the amount of Karl Fischer reagent consumed.
(5) The moisture content of the separator is determined as an average value of three measurements in (4) above.

### 3. Thermal shrinkage rate

The thermal shrinkage rate of the separator made from the polymer slurry obtained in the Example and Comparative Example was measured according to the following procedure.
(1) The polymer slurry obtained in the Example and Comparative Example is coated on a polyethylene substrate layer having a thickness of 11 µm with a Meyer bar.
(2) The coated slurry is dried in a Mathis oven to manufacture a separator.
(3) The separator is cut into a square having an area of 5 × 5 cm² to obtain a measurement specimen.
(4) Four points spaced 1.5 cm apart are marked on the measurement specimen with an oil-based pen.
(5) The separator specimen is heat-treated for about 30 minutes in a Mathis oven maintained at 150 °C.
(6) The separator specimen is taken out of the Mathis oven, and the spacings between the four points marked on the specimen are measured with a ruler. Since changes in spacing are confirmed at three points, the average value of the three points is treated as the spacing of the points after heat treatment.
(7) The rate of change in the spacing of the four points before and after heat treatment is evaluated as the thermal shrinkage rate.

### [Results and Discussion]

Tables 1 and 2 below summarize the evaluation results of the polymer compositions of the Preparation Examples and the polymer slurries of the Example and Comparative Example.

**[Table 1]**

| | Molecular weight (×1000) | Polydispersity index |
|---|---|---|
| Preparation Example 1 | 740 | 3.59 |
| Preparation Example 2 | 275 | 2.70 |

**[Table 2]**

| | First polymer composition | Polymer layer thickness (µm) | Moisture content (ppm) | Thermal shrinkage rate (%) |
|---|---|---|---|---|
| Example | Preparation Example 1 | 1.33 | 756 | 2 |
| Comparative Example | Preparation Example 2 | 1.30 | 802 | 10 |

Referring to Tables 1 and 2, it can be seen that the separator of the Example reduces the moisture content by approximately 46 ppm and reduces the thermal shrinkage rate by approximately 8% compared to the separator of the Comparative Example. Considering that even trace amounts of moisture can degrade battery performance, it can be seen that the differences in moisture content and thermal shrinkage rate between the separators of the Example and Comparative Example can impart a significant difference in battery performance.

## Claims

1. A polymer composition comprising:
a polymer component comprising:
a first polymerization unit derived from a monomer containing an N-unsubstituted (meth)acrylamide group;
a second polymerization unit derived from a monomer containing an N-disubstituted (meth)acrylamide group; and
a third polymerization unit derived from a monomer containing a lactam group having 6 or more nuclear atoms.

2. The polymer composition of claim 1, wherein the content of the first polymerization unit of the polymer component is 80 wt% or more.

3. The polymer composition of claim 1, wherein the content of the second polymerization unit of the polymer component is in the range of 5 parts by weight to 20 parts by weight relative to 100 parts by weight of the first polymerization unit.

4. The polymer composition of claim 1, wherein the content of the third polymerization unit of the polymer component is in the range of 5 parts by weight to 20 parts by weight relative to 100 parts by weight of the first polymerization unit.

5. The polymer composition of claim 1, wherein the first polymerization unit comprises a polymerization unit derived from (meth)acrylamide.

6. The polymer composition of claim 1, wherein the second polymerization unit comprises a polymerization unit derived from dimethyl (meth)acrylamide.

7. The polymer composition of claim 1, wherein the third polymerization unit comprises a polymerization unit derived from a monomer containing an N-substituted lactam group having 6 or more nuclear atoms.

8. The polymer composition of claim 1, wherein the third polymerization unit is derived from a monomer whose homopolymer has a lower critical solution temperature (LCST) in the range of 25 °C to 50 °C.

9. The polymer composition of claim 1, wherein the third polymerization unit comprises a polymerization unit derived from N-vinyl caprolactam.

10. The polymer composition of claim 1, wherein the weight average molecular weight of the polymer component is in the range of 500,000 to 2,000,000.

11. The polymer composition of claim 1, wherein the polydispersity index of the polymer component is in the range of 2.5 to 5.

12. The polymer composition of claim 1, wherein the solid content of the polymer composition is in the range of 1 wt% to 10 wt%.

13. The polymer composition of claim 1, further comprising an aqueous solvent.

14. A polymer slurry comprising:
a first polymer composition;
inorganic particles; and
a second polymer composition;
wherein the first polymer composition comprises a first polymer component comprising:
a first polymerization unit derived from a monomer containing an N-unsubstituted (meth)acrylamide group;
a second polymerization unit derived from a monomer containing an N-disubstituted (meth)acrylamide group; and
a third polymerization unit derived from a monomer containing a lactam group having 6 or more nuclear atoms.

15. The polymer slurry of claim 14, wherein the second polymer composition comprises a (meth)acrylate-based copolymer.

16. The polymer slurry of claim 14, wherein the content of the first polymer composition of the polymer slurry is in the range of 1 part by weight to 5 parts by weight relative to 100 parts by weight of the inorganic particles.

17. The polymer slurry of claim 14, wherein the content of the second polymer composition of the polymer slurry is in the range of 1 part by weight to 5 parts by weight relative to 100 parts by weight of the inorganic particles.

18. The polymer slurry of claim 14, wherein the solid content of the polymer slurry is in the range of 30 wt% to 70 wt%.

19. The polymer slurry of claim 14, further comprising an aqueous solvent.

20. A separator for battery comprising:
a porous substrate layer; and
a polymer layer disposed on one surface or both surfaces of the porous substrate layer;
wherein the polymer layer comprises a first polymer composition; inorganic particles; and a second polymer composition,
and the first polymer composition comprises a first polymer component comprising:
a first polymerization unit derived from a monomer containing an N-unsubstituted (meth)acrylamide group;
a second polymerization unit derived from a monomer containing an N-disubstituted (meth)acrylamide group; and
a third polymerization unit derived from a monomer containing a lactam group having 6 or more nuclear atoms.

21. The separator for battery of claim 20, wherein the thickness per layer of the polymer layer is in the range of 1 µm to 1.5 µm.

22. A battery comprising:
a positive electrode;
a negative electrode;
a separator disposed between the positive electrode and the negative electrode; and
an electrolyte solution,
wherein the separator comprises a porous substrate layer; and a polymer layer disposed on one surface or both surfaces of the porous substrate layer,
the polymer layer comprises a first polymer composition; inorganic particles; and a second polymer composition, and
the first polymer composition comprises a first polymer component comprising:
a first polymerization unit derived from a monomer containing an N-unsubstituted (meth)acrylamide group;
a second polymerization unit derived from a monomer containing an N-disubstituted (meth)acrylamide group; and
a third polymerization unit derived from a monomer containing a lactam group having 6 or more nuclear atoms.

23. The battery of claim 22, wherein the electrolyte solution comprises a carbonate-based solvent.

24. The battery of claim 22, wherein the polymer layer adheres the positive electrode and the substrate layer, the negative electrode and the substrate layer, or both the positive electrode and the substrate layer and the negative electrode and the substrate layer.
